Europäisches Patentamt

European Patent Office

Office européen des brevets

(19)

(11) Publication number: **0 070 126**

**A2**

(12) **EUROPEAN PATENT APPLICATION**

(21) Application number: **82303472.3**

(22) Date of filing: **01.07.82**

(51) Int. Cl.³: **G 01 V 3/08**

(30) Priority: **01.07.81 GB 8120349**

(43) Date of publication of application:
**19.01.83 Bulletin 83/3**

(84) Designated Contracting States:
**AT BE CH DE FR GB IT LI NL SE**

(71) Applicant: **SELTRUST ENGINEERING LIMITED**
**Fleet House 57/61 Clerkenwell Road**
**London ECIM 5SP(GB)**

(72) Inventor: **Schaller, Ronald William**
**16 Breton House The Barbican**
**London E2(GB)**

(74) Representative: **Smith, Philip Antony et al,**
**REDDIE & GROSE 16 Theobalds Road**
**London WC1X 8PL(GB)**

(54) **Personnel proximity sensor.**

(57) A Wien Bridge oscillator comprises an amplifier (IC₁) with an inverting feed-back loop formed by a potentiometer $P_1$ and a resistor $R_3$, and a non-inverting feed-back loop formed by resistors $R_1$ and $R_2$, and a capacitor $C_1$. A sensor wire 20, which has a capacitance $C_{cab}$ to earth is connected via a coupling capacitor $C_c$ and a switch $S_1$ to the non-inverting feed-back loop. The capacitance $C_h$ symbolises the change in the capacitance of the sensor wire caused by the presence of a human body near the wire. The change causes the oscillator to stop oscillating.

EP 0 070 126 A2

./...

Croydon Printing Company Ltd.

Fig. 3

## PERSONNEL PROXIMITY SENSOR

The present invention relates to a personnel proximity sensor for sensing the proximity of part of a human body to the sensor, by responding to a change in the capacitance of a sensing element, caused by the proximity.

Personnel proximity sensors based on a variety of principles are widely known and used for operation of switches when a human hand approaches, and for similar purposes. A sensor according to the invention can be adapted to detect personnel passing a particular point, or to detect personnel approaching a wire which may extend over distances of several hundred yards. A sensor of this kind can be used, for example, in mines, in which the following is a list of some possible applications of the invention.

1. As an emergency stop for a conveyor belt on which personnel travel. Conventional emergency stops have comprised a wire suspended adjacent the conveyor belt, which must be gripped and pulled to activate the stop mechanism. In this application, the invention comprises a wire suspended adjacent the conveyor belt, which need only be approached by part of the body or clothing of the personnel to activate the stop mechanism.

2. As an emergency stop at the end of a personnel conveyor belt which stops the belt if personnel are about to be thrown off the end of the conveyor belt. In this application, wire mesh plates are positioned with the end of the conveyor belt between, and the presence of personnel on the belt at its end is detected.

3. As a detector to detect personnel riding on a conveyor belt intended for conveying materials. In this application, wire mesh plates or wire hoops are positioned with the conveyor belt between, and arranged to stop the belt when the presence of personnel is detected on the belt, between the plates or hoops. This application is intended to prevent personnel riding on a materials conveyor from being fed into machinery, such as coal crushers, for example.

4. As a general purpose sensor to detect personnel entering a dangerous area so that dangerous machines may be switched off and, or alternately, a warning signal may be generated.

Known sensors which operate by detecting capacitive effects, comprise A.C. bridges of which one capacitive element is used as a sensor. An oscillator provides an input to the bridge at a frequency and power chosen so that, in the absence of personnel, the bridge is balanced, and there is no output. A change in the capacitance of the sensing element alters the balance conditions of the bridge, with the effect that a detectable output is produced by the bridge.

In practice, it is difficult to provide a bridge which is sufficiently stable to prevent an unacceptably high frequency of false alarms. Similarly, satisfactory stability of the oscillator frequency is hard to achieve, particularly in harsh environments with a widely varying ambient temperature. To provide easily detectable outputs when personnel are detected, the oscillator, which is constantly running, must be operated at high power, which causes troublesome radiation to be emitted by the sensor, and increases the running costs of the sensor. The power requirement for a particular desired sensitivity may be too great for some dangerous environments, such as mines.

The present invention provides a sensor which comprises a Wien Bridge oscillator, the sensing element being connected to the positive feedback loop of the oscillator, so that the change in the capacitance of the sensing element caused by the proximity of part of a human body to the sensor, causes the oscillator to stop oscillating. The sensor is more stable than known sensors, particularly against temperature changes. The circuit is cheap to build, operates at low power, and the frequency at which it is operated can be chosen so that any radiation caused is not troublesome.

The invention will be described with reference to the drawings in which Fig. 1 shows a known sensor, and Figs. 2 and 3 each show the circuit diagram of an embodiment of the present invention.

The equipment in accordance with the invention uses a Wien Bridge oscillator. A sensor is connected to the non-inverting feed-back system of the oscillator so that the change in capacitance caused by the presence of a human body close to the sensor causes the oscillator to stop oscillating. The inverting feed-back path can be adjusted after the sensor has been fixed in position to a state in which the oscillator is oscillating at a point close to the edge of stable operation. Fine adjustment determines the sensitivity of the circuit and hence how close the body to be detected has to be to the sensor before the capacitance change is sufficient to stop oscillation. The resulting fall to zero in the output of the oscillator is then detected and may be used to effect switching or signalling operations.

The sensor may be in the form of a single wire or a number of wires. For example, for application 1 listed above, two wires may be mounted along the sides of the conveyor. Alternatively or in addition the sensor may comprise one or more metallic plates or grids which only require capacitive coupling to the non-inverting feed-back circuit. Thus a plate or openwork mesh may be clipped to an insulated wire without any direct metallic contact with the wire.

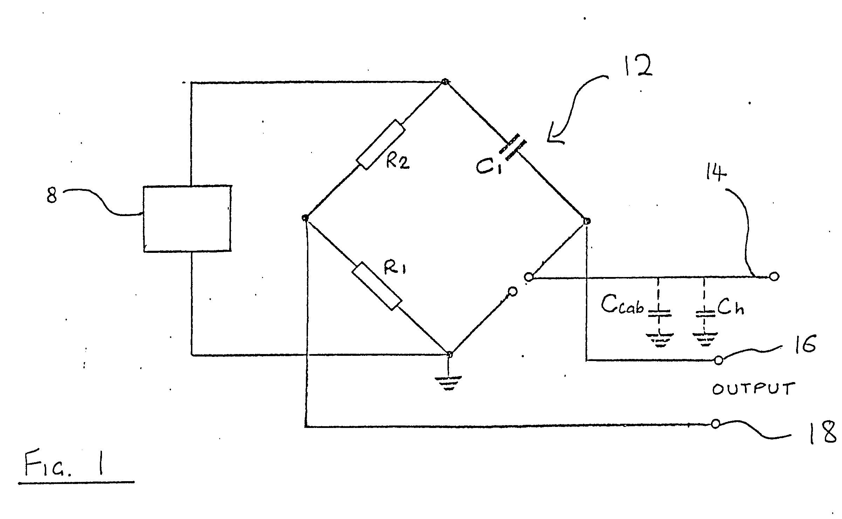

Fig. 1 shows a known personnel proximity sensor, in which the output from an oscillator 8 is fed to an AC bridge circuit 12, which comprises resistors $R_1$, $R_2$, a capacitor $C_1$ and a sensor wire 14. The sensor wire 14 has an effective capacitance to earth, which is shown schematically as $C_{cab}$ in Fig. 1. The presence of a human body close to the sensor wire 14 alters the capacitance of the sensor wire 14. This is indicated by the presence of the schematic capacitor $C_h$. The sensor wire 14 thus completes the A.C. bridge. The oscillator frequency and component values are chosen to balance the bridge in the absence of personnel, so that no voltage difference is present between the output terminals 16, 18. As described above, the oscillator must run constantly and at high power which causes undesirable radiation to be emitted by the sensor wire 14.

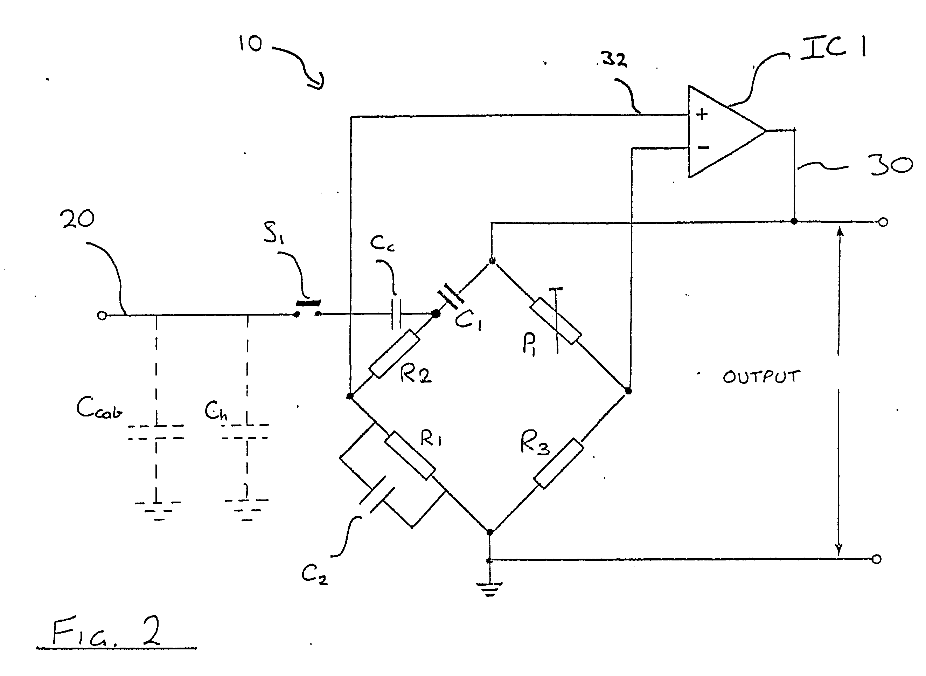

Referring to Fig.2, the circuit of one embodiment of the invention comprises a Wien Bridge oscillator 10 which includes an amplifier $IC_1$ of the type 741S with an inverting feedback circuit including a resistor $R_3$ and a potentiometer P1 which is used to balance the bridge initially. The non-inverting feed-back circuit includes resistors $R_1$ and $R_2$ and capacitors $C_1$ and $C_2$. A sensor wire 20 is coupled into the non-inverting feed-back circuit by way of a

switch $S_1$ and a coupling capacitor, $C_c$. The oscillator 10 operates at a frequency compatible with the parameters of the sensors and high enough to allow a rapid response to sensed capacitance changes. In a practical example it operates at about 60 KHz and is adjusted so as to be "on the edge" of oscillation. An increase in capacitance applied to the sensor wires by the approach of a human body or part thereof, shown schematically, as in Fig.1, by capacitors $C_{cab}$ and $C_h$, will cause the oscillator to "drop out" and the output of the oscillator to fall to zero. The effect of a man approaching or touching the sensors adds capacitance to what is effectively a harmonic filter, this changes the base frequency of the oscillator altering the feed-back ratio (of approximately 3 to 1 for the Wien Bridge) with the result that oscillation breaks down and the oscillator output goes "low".

The output voltage levels can be arranged to be at standard digital voltage levels, so that complex interfacing is not required.

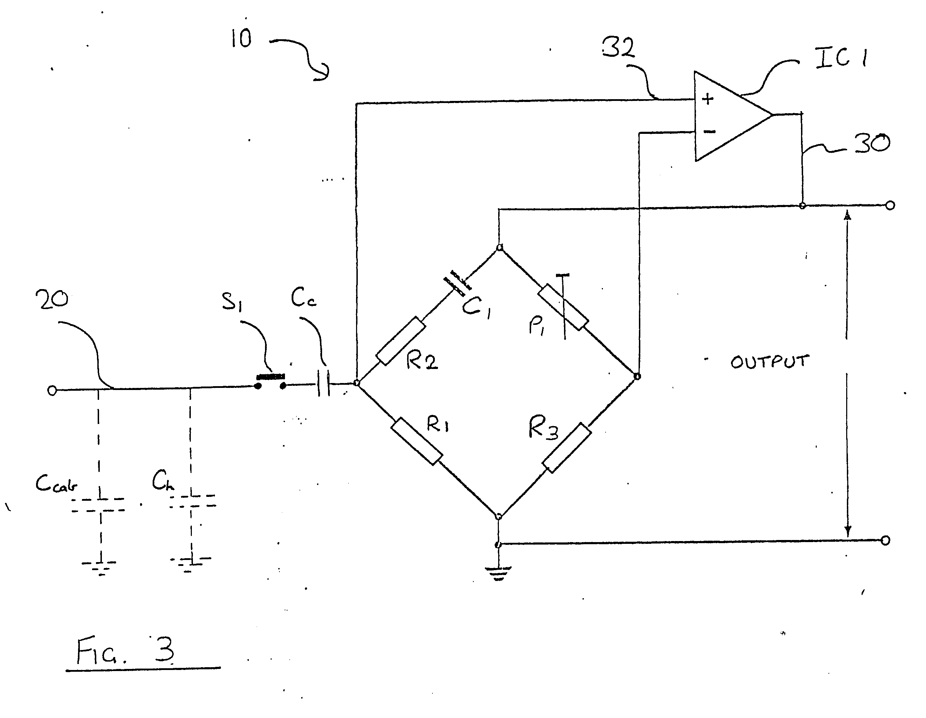

Fig. 3 shows a second embodiment of the invention, which operates in the same manner as the circuit of Fig.2, but which differs from the circuit of Fig.2 in that the sensor wire is connected to a different point of the bridge circuit. Integers which are common to both embodiments are indicated by a common numeral. The Wien Bridge Oscillator 10 includes an amplifier $IC_1$ with a non-inverting feed-back circuit which includes a resistor $R_2$ and capacitor $C_2$ connected in series between the amplifier output 30 and the non-inverting amplifier input 32.

A resistor $R_1$ is connected between the non-inverting input of the amplifier and earth, or a relative earth line. The sensor wire 20 is also connected to the non-inverting input of the amplifier, through a switch $S_1$ and a coupling capacitor $C_c$, and has an effective capacitance $C_{cab}$ between the input and earth. Again, the presence of a human body in the vicinity of the sensor wire is indicated schematically by the presence of a capacitance $C_h$, and causes the oscillator 10 to "drop out" so that the output falls to zero.

Because of the advanced state of Operational Amplifier design, the Wien Bridge Oscillator described is easy to balance and uses very little power, typically drawing only 1 to 3 mA at digital voltage levels.

The low power requirements and stability make the circuit useful for application in mines and other hazardous environments. For instance, the circuit satisfies all the safety standards required for use in the applications listed at the beginning of the specification. It is a straightforward matter to adapt the Wien Bridge Oscillator so that it can be used with a variety of sensor forms, e.g. a long sensor wire, plate or wire mesh. Whichever form of sensor is used, the remaining components of the system are chosen so that the oscillator is "on the edge" of oscillation in the absence of human bodies near the sensor element.

If desired, two sensor wires may be used, one connected as shown in Fig.2 and the second connected as shown in Fig.3. The capacitance $C_2$ (Fig.2) is not shown in Fig.3, which shows the preferred embodiment, but may be included. The possible variations described alter the characteristics of the sensor. In practice, the embodiment and the values of the circuit elements are chosen so as to provide sensor parameters suitable for the intended application.

CLAIMS:

1.    A personnel proximity sensor for sensing the proximity of part of a human body to the sensor by responding to a change in the capacitance of a sensing element caused by the proximity, characterised in that the sensor comprises a Wien Bridge oscillator (10) having an oscillating and a non-oscillating state, the sensing element (20) being connected to the non-inverting feed-back loop of the oscillator (10), so that the change in the capacitance of the sensing element (20) causes the oscillator (10) to change state.

2.    A personnel proximity sensor according to claim 1, further characterised in that the sensing element (20) provides a sensing capacitance in the Wien Bridge oscillator (10), between the non- inverting amplifier input (32) and earth.

3.    A personnel proximity sensor according to claim 1, further characterised in that the non-inverting feedback loop of the oscill- ator comprises a capacitance $(C_1)$ and a resistance $(R_2)$ connected in series between the amplifier output and the non-inverting amplifier input (32), the capacitance $(C_1)$ being connected to the output, and the sensing element (20) being connected between the resistor $(R_2)$ and the capacitor $(C_1)$.

4.    A personnel proximity sensor according to any of the above claims, further characterised in that a coupling capacitance $(C_c)$ is provided between the Wien Bridge oscillator (10) and the sensing element (20).

5.    A personnel proximity sensor according to any of the above claims, further characterised in that the amplifier $(IC_1)$ of the Wien Bridge oscillator (10) is an operational amplifier.

6.    A personnel proximity sensor according to any of the above claims, further characterised in that the sensing element (20) is a wire.

7.    A personnel proximity sensor according to any of claims
1 to 5 further characterised in that the sensing element (20) is
a wire mesh plate.

8.    A personnel proximity sensor according to any of claims
1 to 5 further characterised in that the sensing element (20) is
a wire loop.

9.    A personnel proximity sensor substantially as described
above with reference to Fig. 2 or Fig. 3 of the accompanying
drawings.

10.    A personnel proximity sensor for sensing the proximity of
part of a human body to the sensor by responding to a change in the
capacitance of a sensing element caused by the proximity, characterised in that the sensor comprises a Wien Bridge oscillator (10), the
oscillator (10) having an oscillating and a non-oscillating state and
comprising an operational amplifier ($IC_1$) with a non-inverting feed-
back loop comprising a capacitor ($C_1$) and a resistor ($R_2$) connected
in series between the output (30) of the amplifier ($IC_1$) and the
non-inverting amplifier input (32) and a resistor ($R_1$) connected
between the non-inverting amplifier input (32) and earth, and an
inverting feedback loop comprising a potentiometer ($P_1$) connected
between the amplifier output (30) and the inverting amplifier input
and a resistor ($R_3$) connected between  the inverting amplifier input
and earth, and the sensor being further characterised in that the
sensing element is a sensing wire (20) connected to the non-inverting
amplifier input (32), so that the change in the capacity of the
sensing wire (20) caused by the proximity of part of a human body
causes the oscillator (10) to change state.

Fig. 1

0070126

IC 1

30

32

10

20

$S_1$

$C_c$

$C_1$

$R_1$

$R_2$

$R_3$

$R_1$

$C_2$

$C_h$

$C_{cab}$

OUTPUT

F1G. 2

Fig. 3